**Europäisches Patentamt**

**European Patent Office**

**Office européen des brevets**

(19)

(11) Veröffentlichungsnummer: **0 059 340**

**A1**

## (12) EUROPÄISCHE PATENTANMELDUNG

(21) Anmeldenummer: **82100917.2**

(22) Anmeldetag: **09.02.82**

(51) Int. Cl.³: **C 05 F 9/02**

(30) Priorität: **11.02.81 DE 3104799**

(43) Veröffentlichungstag der Anmeldung:
**08.09.82 Patentblatt 82/36**

(84) Benannte Vertragsstaaten:
**AT CH FR GB LI NL**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(54) **Gartenkompostierung.**

(57) Zur Mechanisierung des Kompostierens von Gartenabfällen u. dgl. soll dem eigentlichen Lagerbehälter (2) ein Aufnahmebehälter (1) zugeordnet werden, in dem das Rottegut durch mechanische Elemente (3, 4) wiederholt umgesetzt, zerkleinert und mit frischem Material vermischt wird, bis es einen bestimmten Rottegrad erreicht hat. Erst danach wird es zur Nachverrottung in den eigentlichen Lagerbehälter (2) überführt; letzterer bildet zugleich das Untergestell des Aufnahmebehälters (1).

Fig. 1

EP 0 059 340 A1

Ernst Weichel

Bahnhofstraße 1

7326 Heiningen                8. Februar 82

Gartenkompostierung

────────────

Die Erfindung bezieht sich nach dem Oberbegriff des Hauptanspruchs auf ein Verfahren zur Kompostierung organischer Stoffe, insbesondere von Haus- und Gartenabfällen sowie auf eine Vorrichtung zur Durchführung des erfindungsgemäßen Verfahrens.

Bei Haus- und Gartenabfällen ist bislang ganz allgemein die sogenannte Haufenkompostierung üblich, bei der mehr oder minder gut zerkleinertes, pflanzliches Abfallmaterial in freien Haufen aufgeschichtet bzw. in entsprechende stationäre Kleinsilos o.dgl. eingelagert wird und daselbst, mit oder ohne Umschichten des Rottegutes, verbleibt, bis seine völlige Umsetzung zu Humus stattgefunden hat.

Die Nachteile dieses bekannten Verfahrens sind deshalb darin zu sehen, daß einerseits viel Hand- und Einzelarbeiten am Komposthaufen erforderlich sind, wenn möglichst rasch guter Kompost erzielt werden soll, oder aber - wird auf diese mühsame Handarbeit verzichtet - ein langer Zeitraum vergeht, bis die Verrottung soweit fortgeschritten ist, daß fertiger Kompost abgesiebt und entnommen werden kann.

Es ist auch bereits eine mechanische Umsetzeinrichtung bei der Kleinkompostierung bekannt geworden, bei der das Rottegut innerhalb eines behälterartigen Gestells mit seitlichen Begrenzungswänden durch einen geneigten Förderer von einer Seite des Lagerbehälters auf die gegenüberliegende umsetzbar ist.

Bei diesem Verfahren findet zwar eine Belüftung des Rottegutes statt, jedoch keine intensive Untermischung oder Auflösung von eventuellen Fäulnisnestern, geschweige denn eine stetige oder wiederholte Zerkleinerung der pflanzlichen Abfälle.

Die Aufgabe der vorliegenden Erfindung besteht daher im wesentlichen darin, ein Verfahren und eine Vorrichtung zur Kompostierung organischer Abfälle zu schaffen, das die Nachteile der primitiven Haufenkompostierung vermeidet und sowohl in Privatgärten, als auch in kleineren landwirtschaftlichen oder gärtnerischen Betrieben zur Kompostierung aller jeweils anfallenden, pflanzlichen Stoffe, verwendbar ist. Des weiteren soll vor allem jede Art mühsamer Handarbeit entfallen und die Kompostierung so weitgehend mechanisiert werden, daß in kürzester Zeit sowie nahezu selbsttätig gute Kompostqualitäten heranreifen.

Gelöst wird diese Aufgabe in verblüffend einfacher Weise durch die in den Patentansprüchen angegebenen, verfahrensmäßigen Maßnahmen in Verbindung mit den speziellen Vorrichtungsmerkmalen der vorliegenden Erfindung.

Diese Vorrichtungsmerkmale sind in der beigefügten Zeichnung weitestgehend schematisch und dem Verständnis des Funktionsprinzips entsprechend, dargestellt und anhand dieser Skizzen als Beschreibung näher erläutert.

Es zeigen:

Fig. 1    die Seitenansicht einer erfindungsgemäßen
         Kleinkompostierungseinrichtung und

Fig. 2    eine Stirnansicht zu Fig. 1.

Die zur Durchführung des mechanisierten Kompostierungsverfahrens dienende Vorrichtung besteht erfindungsgemäß im wesentlichen aus dem Lagerbehälter 2, der der späteren Nachverrottung des vorkompostierten Materials dient, sowie einem Aufnahmebehälter 1, der auf den Lagerbehälter aufgesetzt ist. Beide Behälter bilden zusammen eine bauliche Einheit. Vorzugsweise mittig in dem Aufnahmebehälter 1 ist eine drehend angetriebene Förderwalze 3, die mit Zinken bzw. Schneiden 4 besetzt ist, angeordnet und von einem Antriebsmotor 6 angetrieben. Gemäß dem erfindungsgemäßen Verfahren wird nun in eine der Seiten des Aufnahmebehälters das pflanzliche Abfallmaterial eingebracht und kontinuierlich oder in gewissen Zeitabständen mittels dieser Förderwalze 3, 4 von der einen Behälterseite auf die andere überführt. Bei diesem Vorgang wird zugleich eine Zerkleinerung des Materials vorgenommen, was dadurch geschieht, daß den Förderzinken 4 entweder an der Abdeckung 7 oder im Bodenbereich 1b des Behälters 1 Gegenschneiden 4 bzw. 4a zugeordnet sind.

Das Vorschieben des Gutes gegen den Förderer bzw. Zerkleinerer 3,4 ist dabei in der Weise denkbar, daß der Boden 1b des Aufnahmebehälters 1 als sogenannter, von Ladewagen her bekannter, Kratzboden 5 ausgebildet ist oder aber der gesamte Aufnahmebehälter 1 aus seiner Mittelstellung K jeweils nach links oder rechts reversierend horizontal in eine Stellung K' verfahren werden kann.

0059340

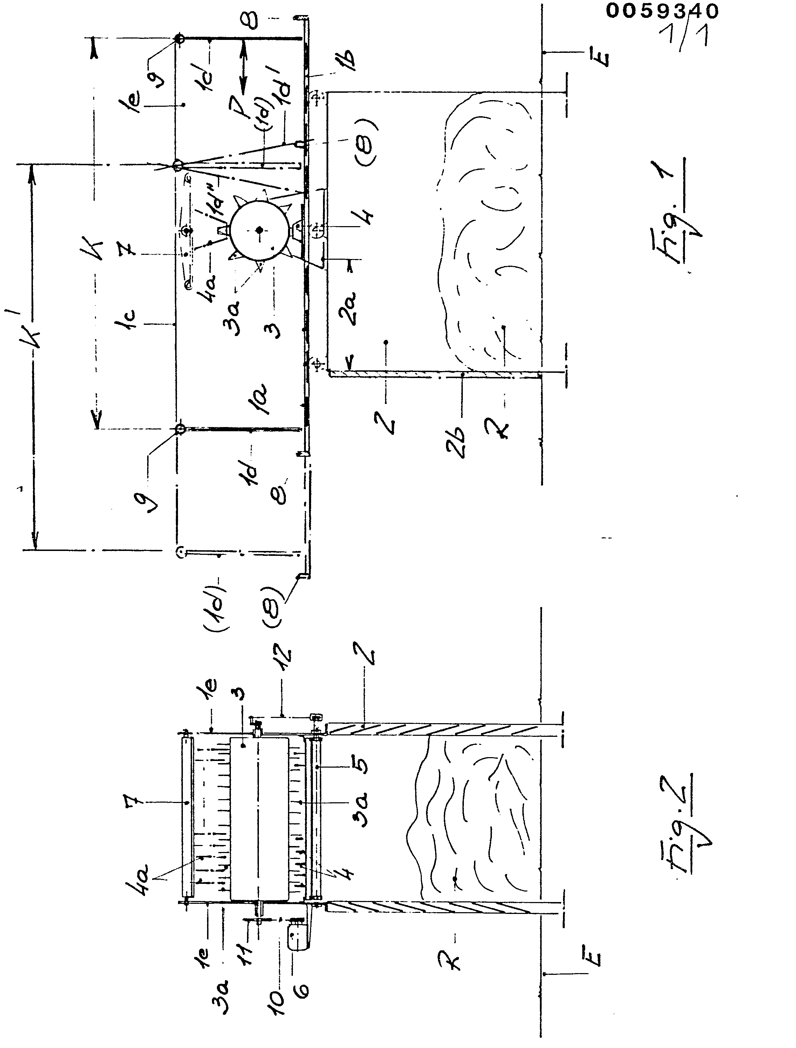

Die hierfür erforderliche Antriebsbewegung ist in Fig. 2 durch die Verbindung des Motor 6 über eine Kette 10 mit Ritzel 11 und Schrittschaltwerk 12 schematisch angedeutet. Die in Fig. 1 zudem angedeutete pendelnde Aufhängung der stirnseitigen Behälterwandungen 1d an den Behälterlängsseiten 1e dient dazu, in den jeweiligen Endlagen das Abfallmaterial möglichst nahe an die Förder- und Zerkleinerungswalze 3, 4 heranzuführen ( Stellung 1d" ) bzw. bei der Förderumkehr bis in die Endlage 1d' an den Anschlag 8 selbstätig zurückzugleiten, wenn das zuvor abgeförderte Abfallmaterial wieder in die zuvor entleerte Seite des Behälters 1 zurückgefördert wird. Zur Entleerung des Aufnahmebehälters 1 und Überführung des dort vorgerotteten Materials in den Lagerbehälter 2 zwecks Fertigkompostierung können beide Behälter 1 und 2 in eine Stellung zueinander gebracht werden, daß sich die Bereiche 1a und 2a überdecken. Eine Durchtrittsöffnung für das im Aufnahmebehälter vorgerottete Material und dessen Überführung in den Aufnahmebehälter 2 wird dann dadurch geschaffen, daß im Bereich von 1a herausnehmbare Bodenbretter in dem Aufnahmebehälter 1 vorgesehen sind.

Die gesamte Einrichtung sollte sinnvoller Weise elektromotorisch angetrieben sein, wobei es ohne weiteres denkbar ist, dem Antriebsmotor 6 ein nicht dargestelltes Zeit-Schaltwerk zuzuordnen, um den gesamten Vorgang des Umsetzens vollautomatisch zu steuern. Mit Pos.5 sind noch die pendelnden Lagerungen der Behälterstirnseiten 1d angedeutet, sowie mit R das Rottegut im Behälter 2, der auf dem Erdboden E aufgestellt bzw. verankert ist.

Patentansprüche

1. Verfahren zur Kompostierung organischer Stoffe, insbesondere von Haus- und Gartenabfällen, wobei das zu verrottende Material in einen Aufnahmebehälter eingebracht und über Fördermittel in gewissen Zeitabständen selbsttätig aus der einen Behälterseite entnommen, gelockert, belüftet und auf der entgegengesetzten Seite wieder abgelegt wird,

d a d u r c h   g e k e n n z e i c h n e t ,

daß bei jedem der Umsetzvorgänge neben einer intensiven Untermischung des bereits eingelagerten mit eventuell frischem Rottegut eine erneute Materialzerkleinerung stattfindet.

2. Verfahren nach Anspruch 1,

d a d u r c h   g e k e n n z e i c h n e t ,

daß das verrottende Material zwischen den einzelnen Umsetz- und Zerkleinerungsvorgängen in dem Aufnahmebehälter ( 1 ) verbleibt und erst nach Erreichen eines gewünschten Rottegrades zur Fertig- bzw. Nachkompostierung in einen gesonderten Lagerbehälter ( 2 ) überführt wird.

3. Vorrichtung zur Durchführung des Verfahrens nach den Ansprüchen 1 und 2,

d a d u r c h   g e k e n n z e i c h n e t ,

daß Aufnahme- ( 1 ) und Lagerbehälter ( 2 ) zu einer baulichen Einheit zusammengefaßt sind, in dem Aufnahmebehälter ( 1 ) mindestens eine Förder- und Zerkleinerungseinheit ( 3, 4 ) angeordnet ist und beide Behälter ( 1 bzw. 2 ) zur Überführung des Rottegutes in Deckung zueinander bringbare Durchtrittsöffnungen ( 1a bzw 2a ) aufweisen.

4. Vorrichtung nach Anspruch 3,

d a d u r c h   g e k e n n z e i c h n e t ,

daß der Boden ( 1b ) des Aufnahmebehälters ( 1 ) auf der offenen Oberfläche ( 2a ) des Lagerbehälters ( 2 ) aufsitzt, die Förder- und Zerkleinerungseinheit ( 3, 4 ) walzenförmig ausgebildet und stationär an dem Lager- bzw. Aufnahmebehälter ( 2 bzw. 1 ) angeschlossen und letzterer ( 1 ) derart ausgebildet ist,
daß er einen das Rottegut gegen die Förder- und Zerkleinerungsorgane ( 3, 4 ) schrittweise vorschiebenden Kratzboden ( 5 ) aufweist, oder aber als Ganzes gegenüber dem Lagerbehälter ( 2 ) und der Zerkleinerungseinheit horizontal reversierend verfahrbar mit letzterem verbunden ist.

5. Vorrichtung nach den Ansprüchen 3 und 4,

   d a d u r c h   g e k e n n z e i c h n e t ,

   daß die Antriebsbewegung der Förder- und Zerkleinerungsorgane sowie des Aufnahmebehälters ( 2 ) bzw. des Behälterbodens ( 5 ) von einem gemeinsamen Antriebsmotor ( 6 ) abgeleitet sind.

6. Vorrichtung nach den Ansprüchen 3 bis 5,

   d a d u r c h   g e k e n n z e i c h n e t ,

   daß Boden ( 1b ) des Aufnahmebehälters ( 1 ) eine verschließ- bzw. abdeckbare Luke ( 1a ) aufweist.

7. Vorrichtung nach den Ansprüchen 3 bis 6,

   d a d u r c h   g e k e n n z e i c h n e t ,

   daß der Aufnahmebehälter ( 1 ) aus einem nach oben offenen Kasten besteht, dessen Oberseite ( 1c ) lediglich im Bereich der Förder- und Zerkleinerungsorgane ( 3, 4 ) ein Leitblech bzw. eine Abdeckung ( 7 ) aufweist.

8. Vorrichtung nach den Ansprüchen 3 bis 7,

d a d u r c h   g e k e n n z e i c h n e t ,

daß die Wandungen von Aufnahme- und Lagerbehälter ( 1 und 2 ) luftdurchlässig ausgebildet sind.

9. Vorrichtung nach den Ansprüchen 3 bis 8,

d a d u r c h   g e k e n n z e i c h n e t ,

daß die in Bewegungsrichtung ( Pfeil P ) des Aufnahmebehälters ( 1 ) jeweils stirnseitig liegenden Behälterwandungen ( 1d ) pendelnd an den Behälterlängsseiten ( 1e ) angelenkt und in einer ihrer Endlagen ( 1d' ) durch Anschläge ( 8 ) begrenzt sind.

10. Vorrichtung nach den Ansprüchen 3 bis 9,

d a d u r c h   g e k e n n z e i c h n e t ,

daß die Förder- und Zerkleinerungseinheit aus einer mit Schneiden, Zinken o.dgl. ( 3a) besetzten, umlaufenden Walze ( 3 ) besteht und letzterer am Behälterboden ( 1b ) und/oder am oberen Abdeckblech ( 7 ) befestigte Gegenschneiden ( 4 bzw. 4a ) o.dgl. zugeordnet sind.

_Fig. 2_

_Fig. 1_

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. 3) |
|---|---|---|---|
| A | US-A-3 438 740 (VICTOR BROWN) <br> * Spalte 4, Anspruch 1; Spalte 3, Zeilen 9-29 * | 1 | C 05 F 9/02 |
| A | EP-A-0 004 094 (BURKLIN) <br> * Seite 23, Anspruch 1 * | 1 | |
| A | FR-A-2 398 033 (TECHNICOMPLEX) <br> * Seite 6, Ansprüche 1,5 * | 1 | |
| A | FR-A-1 527 822 (VENOT-PIC) | | |
| A | GB-A-1 052 164 (NEW LIFE FOUNDATION) | | |
| A | US-A-4 108 609 (PETZINGER) | | |

|  |
|---|
| RECHERCHIERTE SACHGEBIETE (Int. Cl. 3) |
| C 05 F 9/02 <br> C 05 F 13/00 <br> A 01 C 3/00 <br> C 05 F 9/04 |

Der vorliegende Recherchenbericht wurde für alle Patentansprüche erstellt.

| Recherchenort | Abschlußdatum der Recherche | Prüfer |
|---|---|---|
| DEN HAAG | 21-06-1982 | STEELANDT B. |